# FASCICULE DE BREVET EUROPEEN

(11) **EP 1 164 034 B1**
(45) Date de publication et mention de la délivrance du brevet: **23.11.2005**
(21) Numéro de dépôt: 01401554.9
(22) Date de dépôt: 14.06.2001
(51) Int. Cl.: B60C 23/04

(54) **Boîtier de capteur de pression de pneumatique de véhicule automobile**
Gehäuse für Drucksensor für einen Reifen von einem Kraftfahrzeug
Pressure sensor housing for a tyre of a vehicle

(30) Priorité: 15.06.2000 FR 0007625
(43) Date de publication de la demande: 19.12.2001
(73) Titulaire: JOHNSON CONTROLS AUTOMOTIVE ELECTRONICS, 95526 Cergy Pontoise Cédex (FR)
(72) Inventeur: Delaporte, Francis, 95520 Osny (FR); Pozzi, Didier, 95310 Saint Ouen L'Aumone (FR)
(74) Mandataire: Bloch, Gérard

(56) Documents cités:
- FR-A- 2 661 373
- US-A- 5 637 926

## Description

Un capteur de pression de pneumatique de roue de véhicule automobile sert à signaler au conducteur, à travers le calculateur de bord, toute anomalie du pneumatique, susceptible de compromettre sa sécurité.

Le capteur est placé dans le pneumatique et, précisément, est fixé à la périphérie circonférentielle de la jante et plaqué sur celle-ci afin d'éviter les vibrations. Comme les jantes ne sont pas universelles et qu'il existe plusieurs diamètres de jantes, il faut donc autant de types de boîtier de capteur que de types de jante. Un type de boîtier est décrit dans le document JP 04 146 806.

Les boîtiers ne peuvent donc être fabriqués que par séries limitées.

La présente invention vise à proposer des boîtiers de capteur de pression universels.

A cet effet, l'invention concerne un boîtier de capteur de pression de pneumatique de roue de véhicule automobile agencé pour être monté sur la jante de la roue, caractérisé par le fait qu'il comporte des ailes d'appui de hauteur variable et un puits de réception d'un goujon de fixation solidaire de la jante.

On notera qu'il faut distinguer entre hauteur et longueur des ailes et que par hauteur il faut entendre la distance entre le plan des lignes d'appui des ailes et le plan externe opposé du boîtier, a priori fixé en position par rapport à l'axe des jantes. En d'autres termes, cette hauteur correspond au gabarit radial du capteur de l'invention.

Grâce à l'invention, le boîtier peut donc prendre appui sur des jantes de rayon de courbure quelconque. Le boîtier peut ainsi être fixé sans aucune nécessité de réglage à des jantes de diamètres différents, tout en restant bien plaqué.

Avantageusement, les ailes d'appui sont élastiquement déformables.

L'invention sera mieux comprise à l'aide de la description suivante de deux formes de réalisation du boîtier de l'invention, en référence au dessin annexé, sur lequel
- la figure 1 est une vue en perspective de la première forme de réalisation du boîtier de l'invention,
- la figure 2 est une vue en coupe du boîtier de la figure 1 dans un plan radial d'une jante sur laquelle il est monté,
- la figure 3 est une vue en perspective de la deuxième forme de réalisation du boîtier de l'invention et
- la figure 4 est une vue en coupe du boîtier de la figure 3 dans un plan radial d'une jante sur laquelle il est monté.

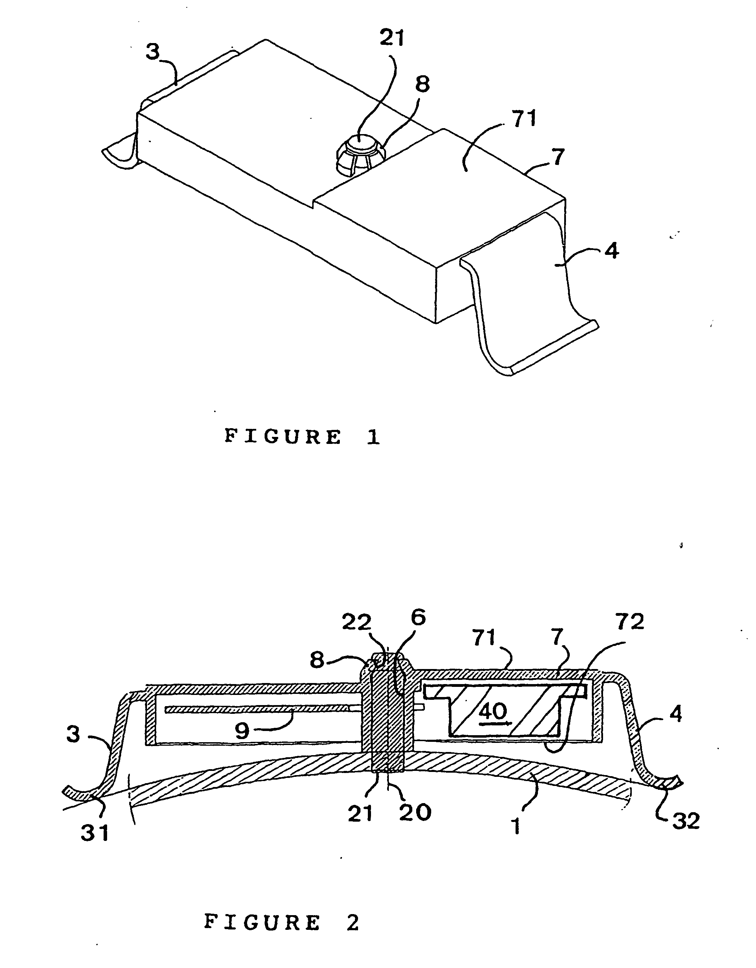

En référence aux figures 1 et 2, le boîtier de la première forme de réalisation comporte un corps 7 de forme sensiblement parallélépipédique rectangle s'étendant selon la direction circonférentielle d'une jante 1 de roue de véhicule automobile qui porte le boîtier.

Le corps de boîtier 7 se prolonge, aux deux extrémités selon sa direction d'extension, par deux ailes respectives 3 et 4, d'appui sur la jante 1, et précisément sur la portion de surface de celle-ci sensiblement de forme cylindrique sur laquelle sera monté le pneumatique. Les ailes 3, 4, ici élastiquement déformables, sont de hauteur variable et prennent appui sur la jante 1 par deux portions d'extrémité recourbées 31, 32. Les ailes 3, 4 sont donc en appui sur deux zones de la jante 1 distantes angulairement et le corps de boîtier 7 s'étend dans le secteur angulaire considéré, avec un écart radial entre la surface de la jante 1, qui est un cercle sur la figure 2, et la surface 72, ici dite inférieure, du corps de boîtier 7, c'est-à-dire celle tournée vers l'intérieur, vers la jante 1.

Les ailes 3, 4 s'étendent chacune sensiblement dans un plan parallèle à l'axe de la jante 1, et précisément elles sont, au repos, sensiblement parallèles aux faces d'extrémité du corps 7 auxquelles elles rattachent respectivement. Les ailes 3, 4 se rattachent ici au corps 7 sensiblement à la hauteur de la surface 71, dite supérieure, du corps 7 tournée vers l'extérieur, à l'opposé de la jante 1.

Un goujon 21 est fixé à la surface cylindrique de la jante 1 et fait saillie radialement vers l'extérieur pour recevoir le boîtier 3, 4, 7 qui comporte à cet effet un puits 6 de réception du goujon de fixation 21, le puits 6 étant ici central et donc situé à mi-distance entre les deux ailes latérales 3, 4.

Dans la présente description, la direction radiale désigne, sauf indication contraire, une direction orthogonale à l'axe de rotation de la jante 1 et plus précisément elle désigne la direction radiale dirigée selon l'axe 20 du goujon 21 et du puits 6. De même, on désigne ici par plan horizontal tout plan perpendiculaire à cette détection radiale, considérée ici comme étant une verticale. On conçoit qu'il s'agit là d'un cas particulier visant à faciliter la description et aucunement d'une quelconque limitation de l'invention.

Dans le corps de boîtier 7, sur la paroi externe du puits 6, est fixée, d'un côté, une carte de circuit imprimé 9, parallèle aux surfaces horizontales 71, 72, portant des composants actifs du capteur, et une pile 40 d'alimentation de la carte 9, disposée de l'autre côté.

Le goujon 21 comporte, dans la zone de son extrémité libre, une gorge circulaire 22, s'étendant dans un plan dit horizontal, destinée à coopérer avec une couronne verticale de languettes élastiques ou cliquets de clipsage 8, solidaires du corps 7 et s'étendant radialement vers l'extérieur à partir de la zone de la surface supérieure 71 entourant l'orifice du puits 6.

La distance radiale de la jante 1 à la gorge 22 est suffisante pour garantir l'existence de l'écart radial, évoqué plus haut, entre la surface inférieure 72 du corps 7 et la jante 1.

Les écarts radiaux entre les divers points de la surface inférieure sensiblement plane 72 du corps de boîtier 7 et des cercles de diverses courbures, représentant des jantes 1 de divers diamètres, croissent ainsi avec la distance ou écart angulaire du point considéré au puits 6. Cette croissance est d'autant plus rapide que le diamètre de jante 1 est faible et donc que la courbure est forte.

Dans les deux zones d'appui des portions 31, 32, les ailes 3, 4 compensent, par leur élasticité, les variations de hauteur du corps de boîtier 7 selon la valeur du diamètre de la jante 1 ces variations de hauteur étant considérées selon la direction verticale du goujon 21, dont la longueur détermine la hauteur de montage du corps de boîtier 7 sur la jante 1.

Le boîtier 3, 4, 7 est ainsi fixé avec verrouillage en position, les cliquets 8 empêchant tout retrait vers le haut du corps 7 par rapport au goujon 21, sous l'action de l'accélération et/ou des ailes élastiques 3, 4 qui tendent à le repousser de la jante 1. Les ailes 3, 4 s'accrochent, à travers le corps 7 et les cliquets 8, sur l'extrémité libre du goujon 21, pour exercer une force de rappel élastique de leurs extrémités d'appui 31, 32 vers la jante 1. Le boîtier 3, 4, 7 ainsi plaqué sur celle-ci et on évite tout mouvement relatif tel que vibration verticale ou rotation autour de l'axe du goujon 21.

Les cliquets 8 permettent un montage rapide par clipsage du boîtier 3, 4, 7 sur la jante 1 puisqu'ils le verrouillent en position dès que la gorge 22 émerge suffisamment du puits 6. Tels que représentés, les cliquets 8 assurent une fixation indémontable. En variante, la gorge 22 présente un versant supérieur de forme conique, et non plus dans un plan horizontal, qui permet d'écarter les cliquets 8 en exerçant sur le boîtier 7 une force de traction vers le haut d'intensité dépassant le seuil de résistance des cliquets 8.

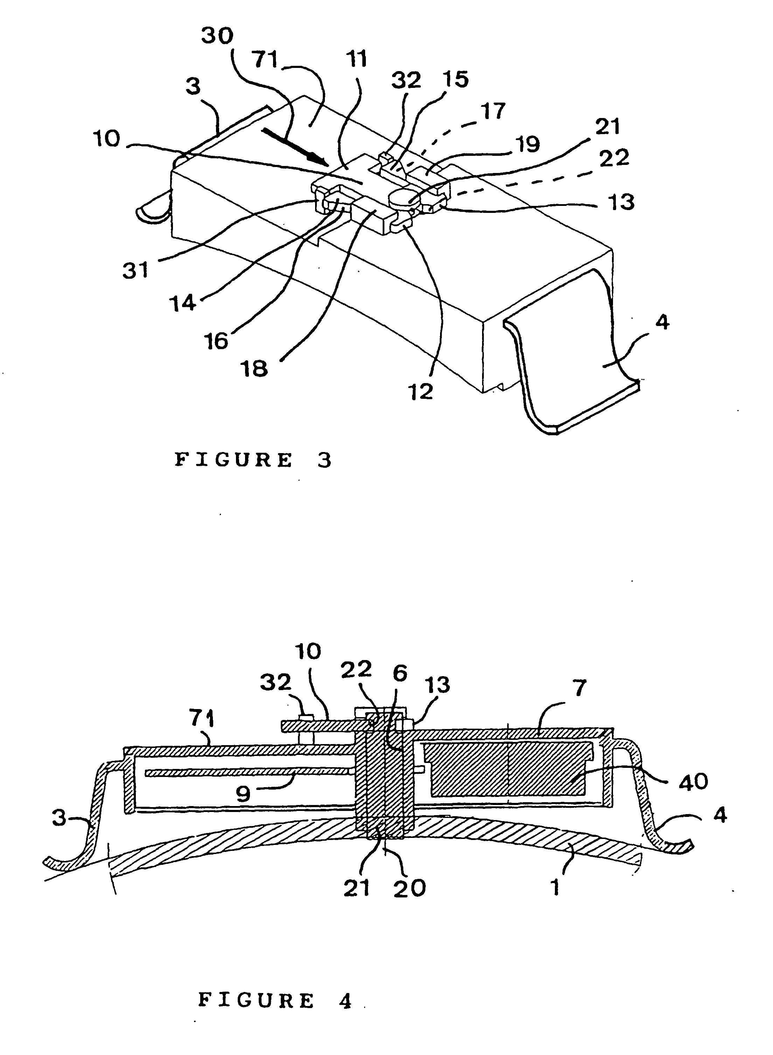

Les figures 3 et 4 illustrent la deuxième forme de réalisation. Les éléments homologues de ceux des figures 1 et 2 ont conservé leur référence. Les figures 3 et 4 ont pour but principal d'illustrer un autre mécanisme de fixation du corps de boîtier 7 sur le goujon 21 comportant la gorge 22. Le mécanisme représenté, disposé sur la surface supérieure 71 et remplaçant les cliquets 8, comporte un clips amovible 10 coopérant avec la gorge 22 pour bloquer le boîtier 7 par rapport au goujon 21 dans une position à hauteur déterminée.

Le clips 10 se présente sous la forme d'une plaquette comportant, à une extrémité, deux protubérances 12, 13 constituant une sone de fourche destinée à entourer partiellement le goujon 21 en s'engageant dans la gorge 22 pour ainsi bloquer tout mouvement vertical entre le goujon 21 et le clips 10, en vue de bloquer tout coulissement ultérieur du boîtier 7 sur le goujon 21.

Le clips 10 glisse sur la surface supérieure 71 et coopère avec deux guides latéraux opposés 18, 19 qui permettent de le faire coulisser en avant selon la direction de la flèche horizontale 30, pour atteindre sa position fonctionnelle ci-dessus de coopération avec la gorge 22, et en arrière pour le dégager de celle-ci. Précisément ici, la direction de la flèche 30 est la direction d'extension du boîtier 7. La direction de la flèche 30 de manoeuvre du clips 10 est donc sensiblement orthogonale aux ailes d'appui 3, 4 qui sont sensiblement parallèles aux faces d'extrémité correspondantes du corps 7, s'étendant dans des plans sensiblement verticaux et dont l'une est visible en partie droite de la figure 3.

Les guides 18, 19, à sections en forme de crochets verticaux tournés l'un vers l'autre, assurent chacun un contact latéral avec les protubérances respectives 12, 13, évitant ainsi toute rotation du clips 10 dans son plan horizontal. Leurs parties d'extrémité en crochet assurent un contact avec le dessus des protubérances 12, 13, empêchant ainsi le clips 10 de s'écarter de la surface 71, ce qui maintient la hauteur de position du boîtier 7 sur le goujon 21. La surface 71 sur laquelle glisse le clips 10 et les guides 18, 19 forment donc une sorte de fourreau ajusté n'autorisant que le coulissement du clips 10 dans un sens ou dans l'autre selon la direction de la flèche 30.

Pour bloquer le clips 10 en position fonctionnelle, avancée, celui-ci comporte deux languettes élastiques latérales 14, 15, déformables dans le plan du clips 10, comportant chacune une zone latérale externe 16, 17 formant coin, s'étendant dans un plan vertical incliné par rapport à la direction de la flèche 30 et tourné partiellement vers cette direction. Comme le montre la figure 3, deux butées latérales 31, 32, en forme de tiges verticales solidaires de la surface 71, présentent un écartement légèrement inférieur à l'encombrement de la portion des languettes 14, 15 comportant les zones inclinées 16, 17. Par coulissement du clips 10 selon la flèche 30, les zones inclinées 16, 17 formant coin viennent au contact des butées 31, 32 respectives et les languettes 14, 15 fléchissent l'une vers l'autre jusqu'à ce leur partie arrière, d'extrémité libre, dépasse les butées 31 et 32. Les languettes 14, 15 reprennent alors leurs forme de repos, leur surface arrière d'extrémité libre tournée à l'opposé de la flèche 30 venant ainsi en regard des butées 31, 32, qui empêchent tout recul du clips 10 lorsqu'il a atteint sa position fonctionnelle de verrouillage.

Le déverrouillage du clips 10 s'effectue manuellement, par un appui latéral sur les deux languettes 14, 15, pour les rapprocher afin de les engager entre les butées 31, 32 en faisant coulisser en arrière le clips 10. Les butées 31, 32 anti-retour ont aussi, dans cet exemple, une fonction de guidage latéral grossier de la base 11 du clips 10 opposée aux protubérances 12, 13 et elles coopèrent donc avec les guides 18, 19.

## Revendications

1. Boîtier de capteur de pression de pneumatique de véhicule automobile agencé pour être monté sur une jante (1), **caractérisé par le fait qu'**il comporte des ailes d'appui (3, 4) de hauteur variable et un puits (6) de réception d'un goujon de fixation (21) solidaire de la jante (1).

2. Boîtier selon la revendication 1, dans lequel les ailes d'appui (3, 4) sont élastiquement déformables.

3. Boîtier de capteur de pression selon l'une des revendications 1 et 2, dans lequel il est prévu des moyens (8; 10, 18, 19, 31, 32) de fixation et de verrouillage en position.

4. Boîtier de capteur de pression selon la revendication 3, dans lequel les moyens de fixation et de verrouillage sont des moyens de clipsage (8; 10).

5. Boîtier de capteur de pression selon la revendication 3, dans lequel les moyens de verrouillage (8) sont déverrouillables.

6. Boîtier de capteur de pression selon la revendication 5, dans lequel les moyens de verrouillage comprennent un clips amovible (10).

7. Boîtier de capteur de pression selon la revendication 6, dans lequel le clips amovible (10) est monté mobile sensiblement orthogonalement aux ailes d'appui (3, 4).

8. Boîtier de capteur de pression selon l'une des revendications 1 à 7, dans lequel le puits de réception (6) est central et situé à mi-distance des ailes d'appui (3, 4).

## Patentansprüche

1. Gehäuse für einen Drucksensor für einen Reifen eines Kraftfahrzeugs, das dazu ausgeführt ist, auf einer Felge (1) befestigt zu werden, **dadurch gekennzeichnet, dass** es Stützflügel (3, 4) mit variabler Höhe und einen Schacht (6) für die Aufnahme eines fest mit der Felge (1) verbundenen Befestigungsstiftes (21) umfasst.

2. Gehäuse nach Anspruch 1, bei dem die Stützflügel (3, 4) elastisch verformbar sind.

3. Gehäuse für einen Drucksensor nach einem der Ansprüche 1 und 2, bei dem Mittel (8; 10, 18, 19, 31, 32) zur Befestigung und Verriegelung in einer Position vorgesehen sind.

4. Gehäuse für einen Drucksensor nach Anspruch 3, bei dem die Befestigungs- und Verriegelungsmittel Clipsmittel (8; 10) sind.

5. Gehäuse für einen Drucksensor nach Anspruch 3, bei dem die Verriegelungsmittel (8) entriegelbar sind.

6. Gehäuse für einen Drucksensor nach Anspruch 5, bei dem die Verriegelungsmittel einen abnehmbaren Clips (10) umfassen.

7. Gehäuse für einen Drucksensor nach Anspruch 6, bei dem der abnehmbare Clips (10) im Wesentlichen orthogonal zu den Stützflügeln (3, 4) beweglich befestigt ist.

8. Gehäuse für einen Drucksensor nach einem der Ansprüche 1 bis 7, bei dem der Aufnahmeschacht (6) mittig und auf halbem Abstand zwischen den Stützflügeln (3, 4) angeordnet ist.

## Claims

1. Motor vehicle tyre pressure sensor housing designed to be mounted on a rim (1), **characterized in that** it comprises bearing flanges (3, 4) of variable height and a well (6) to accommodate a fixing stud (21) part with the rim (1).

2. Housing according to Claim 1 in which the bearing flanges (3, 4) are elastically deformable.

3. Pressure sensor housing according to one of Claims 1 and 2 in which there are means (8; 10, 18, 19, 31, 32) for fixing and locking in position.

4. Pressure sensor housing according to Claim 3 in which the fixing and locking means are clipping means (8; 10) .

5. Pressure sensor housing according to Claim 3, in which the locking means (8) can be unlocked.

6. Pressure sensor housing according to Claim 5, in which the locking means comprise a removable clip (10).

7. Pressure sensor housing according to Claim 6, in which the removable clip (10) is mounted so that it can move more or less at right angles to the bearing flanges (3, 4).

8. Pressure sensor housing according to one of Claims 1 to 7, in which the accommodating well (6) is centrally situated and located midway between the bearing flanges (3, 4).
